(19)

Europäisches
Patentamt
European
Patent Office
Office européen
des brevets

(11) **EP 3 229 195 A1**

(12) **EUROPEAN PATENT APPLICATION**

(43) Date of publication:
**11.10.2017 Bulletin 2017/41**

(51) Int Cl.:
**G06Q 30/02** *(2012.01)*    **G06Q 10/06** *(2012.01)*

(21) Application number: **17162222.8**

(22) Date of filing: **22.03.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **07.04.2016 JP 2016077231**

(71) Applicant: **Toshiba TEC Kabushiki Kaisha
Tokyo 141-0032 (JP)**

(72) Inventors:
• **SAWADA, Takayuki
  Shinagawa-ku, Tokyo 141-8562 (JP)**
• **YASUNAGA, Masaaki
  Shinagawa-ku, Tokyo 141-8562 (JP)**

(74) Representative: **Takeuchi, Maya et al
Fédit-Loriot
38, avenue Hoche
75008 Paris (FR)**

(54) **IMAGE PROCESSING DEVICE**

(57)    According to one embodiment, an image processing device includes a region cutout unit, a mask generation unit, a commodity identification unit, and a discount processing unit. The region cutout unit cuts out a partial image corresponding to commodity from an input image. The mask generation unit generates discount information on the basis of a first pattern image and generates a first mask pattern on the basis of a position where the first pattern image is detected, in a case where the first pattern image is detected in the partial image. The commodity identification unit specifies commodity corresponding to the partial image by matching a mask image which is masked by the first mask pattern with respect to the partial image, with a dictionary-registered image corresponding to each of a plurality of pieces of commodity, and acquires commodity information corresponding to the partial image.

*FIG. 1*

EP 3 229 195 A1

## Description

FIELD

The present invention relates to the field of point of sales register technologies, and embodiments described herein relate more particularly to an image processing device, a system comprising corresponding means and a method for performing an image processing.

BACKGROUND

In general, a point of sales (POS) register (POS terminal) which is used for a store such as a supermarket reads a barcode attached to commodity, thereby registering the commodity that a customer wants to buy. In addition, recently, a POS terminal which reads an external appearance image (package image) of commodity and automatically identifies the commodity by using an image recognition technology appeared.

However, action that a register discounts by affixing a discount seal showing a discount rate or a discount price to bargain goods or daily goods with reduced freshness is taken in many stores so as to eliminate waste loss by quickly selling them. The following two methods are used as a method thereof.

A first method is to affix a discount barcode seal, which is called an off seal and on which a barcode of discounted price is printed, onto an original barcode, and to perform calculation at the discounted price by reading the barcode of discounted price. A second method uses a discount seal. In the second method, a usual price is acquired by reading an original barcode using a barcode scanner, and thereafter, a cashier performs discount processing by performing a manual operation for a discount rate or a discount price described in the discount seal.

In the first method, since the original barcode needs to be overlaid by the discount barcode seal (the off seal), it is necessary for a store staff to confirm a position of the original barcode attached to commodity when affixing the off seal and to pay sufficient attention such that the off seal is affixed to an appropriate position. In the second method, it is necessary to further perform an operation for performing discount according to the discount seal attached to the commodity after an operation of reading the barcode. In addition, in a case where the discount seal is affixed to a characteristic portion of a package image, there is a concern that a POS terminal which reads the package image of commodity cannot accurately identify commodity from the package image, and thus, it is necessary to pay sufficient attention to a position to which the discount seal is affixed.

To this end, there is provided an image processing device comprising:

a region cutout unit that cuts out a partial image corresponding to commodity from an input image;
a mask generation unit that, in a case where a first pattern image is detected in the partial image, generates discount information on the basis of the first pattern image and generates a first mask pattern on the basis of a position where the first pattern image is detected;
a commodity identification unit that specifies commodity corresponding to the partial image by matching a mask image which is masked by the first mask pattern with respect to the partial image, with a dictionary-registered image corresponding to each of a plurality of pieces of commodity, and acquires commodity information corresponding to the partial image; and
a discount processing unit that performs discount processing on the basis of a price of the commodity that the commodity information indicates and the discount information.

Preferably, the device further comprises:

a commodity information acquisition unit that, in a case where a second pattern image is detected in the partial image, acquires commodity information corresponding to the second pattern image,
wherein the commodity identification unit acquires commodity information corresponding to the partial image, based on matching of the mask image and the dictionary-registered image, in a case where the second pattern image is not detected in the partial image.

Preferably still, the mask generation unit generates a third mask pattern on the basis of a position where a third pattern image is detected, in a case where the first pattern image is not detected in the partial image and the third pattern image is detected, and wherein, in a case where the second pattern image is not detected in the partial image, the commodity identification unit specifies commodity corresponding to the partial image by matching a mask image which is masked by the third mask pattern with respect to the partial image with a dictionary-registered image corresponding to each of a plurality of pieces of commodity, and acquires commodity information corresponding to the partial image.

Preferably yet, the region cutout unit cuts out a plurality of partial images corresponding to each of a plurality of pieces of commodity from the input image, and wherein the discount processing unit performs discount processing with respect to the commodity information corresponding to a partial image in which the first pattern image is detected by using the mask generation unit.

Preferably further, the commodity identification unit includes,
a first masking unit that generates a mask partial image by converting a part of the partial image into a constant pixel value, based on the first mask pattern;

a local feature point extraction unit that extracts local feature point information with respect to the mask partial image;

a feature point matching unit that collates the local feature point information and local feature point information of commodity image which is previously registered in a dictionary, and outputs a projection conversion matrix which represents a relative position relationship between both, and commodity information of candidate commodity with respect to content of the partial image, based on a correspondence state of a local feature point between both;

a projection conversion unit that reads a dictionary-registered image corresponding to commodity information of the candidate commodity and generates a projection registration image which is obtained by performing projection conversion of the dictionary-registered image on the basis of the projection conversion matrix;

a second masking unit that generates a mask registration image by converting a part of the projection registration image into a constant pixel value, based on the first mask pattern; and

a detailed matching unit that calculates degree of similarity between the mask partial image and the mask registration image, and outputs commodity information corresponding to the partial image, based on the degree of similarity and a predetermined determination threshold.

The invention also relates to an image processing system comprising:

a region cutout means that cuts out a partial image corresponding to commodity from an input image;

a mask generation means that, in a case where a first pattern image is detected in the partial image, generates discount information on the basis of the first pattern image and generates a first mask pattern on the basis of a position where the first pattern image is detected;

a commodity identification means that specifies commodity corresponding to the partial image by matching a mask image which is masked by the first mask pattern with respect to the partial image, with a dictionary-registered image corresponding to each of a plurality of pieces of commodity, and acquires commodity information corresponding to the partial image; and

a discount processing means that performs discount processing on the basis of a price of the commodity that the commodity information indicates and the discount information.

Suitably, the system further comprises:

a commodity information acquisition means that, in a case where a second pattern image is detected in the partial image, acquires commodity information corresponding to the second pattern image,

wherein the commodity identification means acquires commodity information corresponding to the partial image, based on matching of the mask image and the dictionary-registered image, in a case where the second pattern image is not detected in the partial image.

Suitably still, the mask generation means generates a third mask pattern on the basis of a position where a third pattern image is detected, in a case where the first pattern image is not detected in the partial image and the third pattern image is detected, and

wherein, in a case where the second pattern image is not detected in the partial image, the commodity identification means specifies commodity corresponding to the partial image by matching a mask image which is masked by the third mask pattern with respect to the partial image with a dictionary-registered image corresponding to each of a plurality of pieces of commodity, and acquires commodity information corresponding to the partial image.

Suitably yet, the region cutout means cuts out a plurality of partial images corresponding to each of a plurality of pieces of commodity from the input image, and

wherein the discount processing means performs discount processing with respect to the commodity information corresponding to a partial image in which the first pattern image is detected by using the mask generation means.

Suitably further, the commodity identification means includes,

a first masking means that generates a mask partial image by converting a part of the partial image into a constant pixel value, based on the first mask pattern;

a local feature point extraction means that extracts local feature point information with respect to the mask partial image;

a feature point matching means that collates the local feature point information and local feature point information of commodity image which is previously registered in a dictionary, and outputs a projection conversion matrix which represents a relative position relationship between both, and commodity information of candidate commodity with respect to content of the partial image, based on a correspondence state of a local feature point between both;

a projection conversion means that reads a dictionary-registered image corresponding to commodity information of the candidate commodity and generates a projection registration image which is obtained by performing projection conversion of the dictionary-registered image on the basis of the projection conversion matrix;

a second masking means that generates a mask registration image by converting a part of the projection registration image into a constant pixel value, based on the first mask pattern; and

a detailed matching means that calculates degree of similarity between the mask partial image and the mask registration image, and outputs commodity information corresponding to the partial image, based on the degree of similarity and a predetermined determination threshold.

The invention further concerns a method for performing an image processing, comprising the steps of:

- cutting out, by a region cutout unit, a partial image corresponding to commodity from an input image;
- generating, by a mask generation unit, discount information on the basis of the first pattern image in a case where a first pattern image is detected in the partial image, and generating, by the mask generation unit, a first mask pattern on the basis of a position where the first pattern image is detected;
- specifying, by a commodity identification unit, commodity corresponding to the partial image by matching a mask image which is masked by the first mask pattern with respect to the partial image, with a dictionary-registered image corresponding to each of a plurality of pieces of commodity, and acquiring, by a commodity identification unit, commodity information corresponding to the partial image; and
- performing, by a discount processing unit, discount processing on the basis of a price of the commodity that the commodity information indicates and the discount information.

Typically, the method further comprises the steps of:

- acquiring, by a commodity information acquisition unit, commodity information corresponding to the second pattern image in a case where a second pattern image is detected in the partial image,
- acquiring, by the commodity identification unit, commodity information corresponding to the partial image, based on matching of the mask image and the dictionary-registered image, in a case where the second pattern image is not detected in the partial image.

Typically still, the method further comprises the steps of:

- generating, by the mask generation unit, a third mask pattern on the basis of a position where a third pattern image is detected, in a case where the first pattern image is not detected in the partial image and the third pattern image is detected, and
- specifying, by the commodity identification unit, in a case where the second pattern image is not detected in the partial image, commodity corresponding to the partial image by matching a mask image which is masked by the third mask pattern with respect to the partial image with a dictionary-registered image corresponding to each of a plurality of pieces of commodity, and acquiring, by the commodity identification unit, commodity information corresponding to the partial image.

Typically yet, the method further comprises the steps of:

- cutting out, by the region cutout unit, a plurality of partial images corresponding to each of a plurality of pieces of commodity from the input image, and
- performing, by the discount processing unit, discount processing with respect to the commodity information corresponding to a partial image in which the first pattern image is detected by using the mask generation unit.

Typically further, the method further comprises the steps of:

- generating, by a first masking unit, a mask partial image by converting a part of the partial image into a constant pixel value, based on the first mask pattern;
- extracting, by a local feature point extraction unit, local feature point information with respect to the mask partial image;
- collating, by a feature point matching unit, the local feature point information and local feature point information of commodity image which is previously registered in a dictionary, and outputs a projection conversion matrix which represents a relative position relationship between both, and commodity information of candidate commodity with respect to content of the partial image, based on a correspondence state of a local feature point between both;
- reading, by a projection conversion unit, a dictionary-registered image corresponding to commodity information of the candidate commodity and generating, by the projection conversion unit, a projection registration image which is obtained by performing projection conversion of the dictionary-registered image on the basis of the projection conversion matrix;
- generating, by a second masking unit, a mask registration image by converting a part of the projection registration image into a constant pixel value, based on the first mask pattern; and
- calculating, by a detailed matching unit, degree of similarity between the mask partial image and the mask registration image, and outputting, by the detailed matching unit, commodity information corresponding to the partial image, based on the degree of similarity and a predetermined determination threshold.

DESCRIPTION OF THE DRAWINGS

The above and other objects, features and advantages of the present invention will be made apparent from the following description of the preferred embodiments, given as non-limiting examples, with reference to the accompanying drawings, in which:

FIG. 1 is a block diagram illustrating a configuration of a checkout system in a case where an image processing device according to the present embodiment is realized as POS terminals.

FIG. 2 is a block diagram illustrating a configuration of an image processing function unit according to the present embodiment.

FIG. 3 is a flowchart illustrating an operation of the POS terminal (processor) according to the present embodiment.

FIG. 4 is a flowchart illustrating the operation of the POS terminal (processor) according to the present embodiment.

FIG. 5 is a view illustrating an example of an input image according to the present embodiment.

FIG. 6 is a view illustrating an example of a region segmenting image according to the present embodiment.

FIGS. 7A to 7F are views illustrating processing of the image processing function unit according to the present embodiment.

FIGS. 8A to 8C are views illustrating an example of a discount seal and a flag seal according to the present embodiment.

FIG. 9 is a view illustrating an example of the discount seal and the flag seal affixed to commodity.

FIG. 10 is a diagram illustrating correspondence between feature points (region) of a partial image and feature points (region) of the commodity previously registered in a dictionary.

DETAILED DESCRIPTION

An object of an exemplary embodiment is to provide an image processing device which can reduce work burden and perform reliable discount processing for commodity to which a seal for discount is affixed.

In general, according to one embodiment, an image processing device includes a region cutout unit, a mask generation unit, a commodity identification unit, and a discount processing unit. The region cutout unit cuts out a partial image corresponding to commodity from an input image. The mask generation unit generates discount information on the basis of a first pattern image and generates a first mask pattern on the basis of a position where the first pattern image is detected, in a case where the first pattern image is detected in the partial image. The commodity identification unit specifies commodity corresponding to the partial image by matching a mask image which is masked by the first mask pattern with respect to the partial image, with a dictionary-registered image corresponding to each of a plurality of pieces of commodity, and acquires commodity information corresponding to the partial image. The discount processing unit performs discount processing on the basis of a price of the commodity that the commodity information indicates and the discount information.

Such embodiments may also be applied mutatis mutandis to a system comprising corresponding means.

Likewise, the above embodiments make the basis for a method as defined in claims 11 to 15.

Hereinafter, the present embodiment will be described with reference to the drawings.

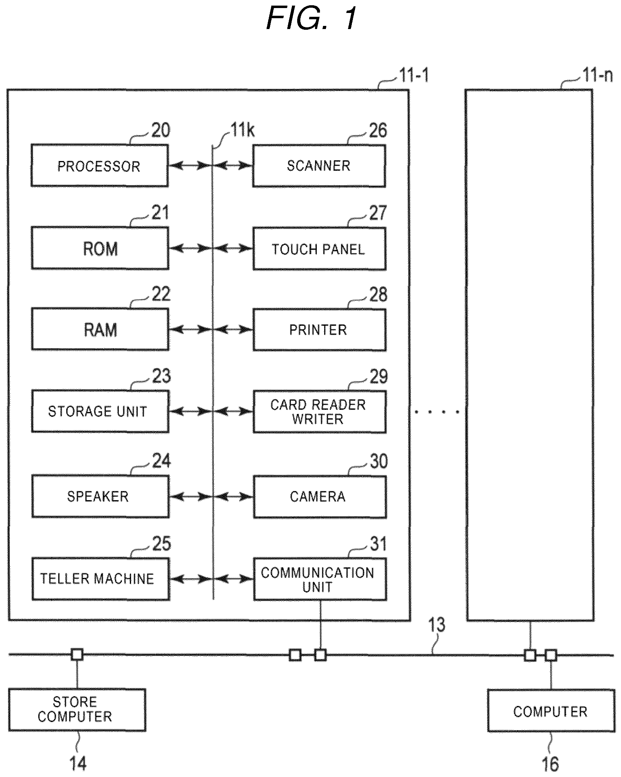

FIG. 1 is a block diagram illustrating a configuration of a checkout system in a case where an image processing device according to the present embodiment is realized as POS terminals 11 (11-1, ..., 11-n). The image processing device is not limited to the POS terminal 11, and can be realized in a device in which a function of registering commodity is provided, such as a self-registration terminal, or a commodity registration machine in a semi-self (sharing system)-checkout system.

The checkout system illustrated in FIG. 1 is used at a store such as a supermarket, and a plurality of the POS terminals 11 (11-1, ..., 11-n) are connected to each other through a network such as the local area network (LAN) 13. The network can use another communication network such as the Internet or a wireless LAN instead of the LAN 13. In addition, a store computer 14 which manages the entire system, a computer 16 which is used by a store clerk, and the like are connected to the LAN 13 in the checkout system.

In the POS terminal 11, a processor 20, a read-only memory (ROM) 21, a random-access memory (RAM) 22, a storage unit 23, a speaker 24, a teller machine 25, a scanner 26, a touch panel 27, a printer 28, a card reader writer 29, a camera 30, and a communication unit 31 are connected to each other through a transfer system 11k.

The processor 20 controls each unit so as to perform various functions as the POS terminal 11, based on an operating system, middleware, and an application program which are stored in the ROM 21 and the RAM 22. The application which is executed by the processor 20 includes, for example, a commodity registration processing program which performs commodity registration processing, an accounting program which performs accounting, and the like. The commodity registration processing program includes an image processing program which identifies commodity to be purchased based on an image of commodity captured by the camera 30 and registers the commodity. In a case where a discount seal is affixed to the commodity, the processor 20 performs a function of performing discount processing on the basis of discount information indicated by the discount seal by executing an image processing program.

The ROM 21 stores a fixed program and data, and stores middleware, an application program, data that the processor 20 refers to in performing various types of processing, and the like.

The RAM 22 is used as a work area for temporarily storing a program or data, such as various programs which are executed by the processor 20, and data that the processor 20 uses in performing various types of processing.

The storage unit 23 can use, for example, an electric erasable programmable read-only memory (EEPROM) (registered trademark), a hard disk drive (HDD), a solid state drive (SSD), or the like. The storage unit 23 stores various types programs which are executed by the processor 20, data that the processor 20 uses in performing various types of processing, or data which is generated by processing of the processor 20. The programs which are stored in the storage unit 23 include a commodity registration processing program and an accounting program.

In addition, the RAM 22 or the storage unit 23 stores an image (input image) of commodity which is captured by the camera 30 for registering the commodity, a dictionary registration image (local feature point information, commodity image) for identifying commodity on the basis of a package image (partial image) of the commodity included in the input image, a pattern image for identifying a seal (discount seal, flag seal) which is affixed to the commodity, a registered commodity list in which data regarding registered commodity that is registered in the commodity registration processing is recorded, and the like.

The speaker 24 outputs a sound such as a warning sound or a message voice.

The teller machine 25 includes a mechanism which handles bills and coins that are inserted from bill and coin slots, and a mechanism which discharges bills and coins from bill and coin discharge port, under control of the processor 20.

The scanner 26 optically reads a barcode in a case where commodity is laid down such that a barcode attached to the commodity faces.

The touch panel 27 includes a display device such as a liquid crystal display (LCD) and a touch sensor. The display device displays a graphical user interface (GUI) screen for inputting various selection instruction or various types of information in accordance with a touch operation of a store employee or a customer.

The printer 28 issues a receipt by printing various character strings, images, or the like on a receipt paper. The printer 28 can use a thermal printer, a dot impact printer, or the like.

The card reader writer 29 includes a function of reading data recorded in a card and a function of writing data to the card. The card may include a membership card which is called a members card, a point card, or the like in addition to a payment card such as a credit card, an electronic money card, or a prepaid card.

The camera 30 is an image capturing device which captures an image of commodity to be purchased that a customer wants to buy. The camera 30 captures an image of, for example, commodity which is placed within a predetermined imaging area in accordance with instruction from the processor 20, and outputs the data (input image) of the captured image. The camera 30 can captures an image including a plurality of commodities which are placed on the imaging area.

The communication unit 31 controls communication between the store computer 14 which is connected through the LAN 13 and other electronic apparatuses including the computer 16.

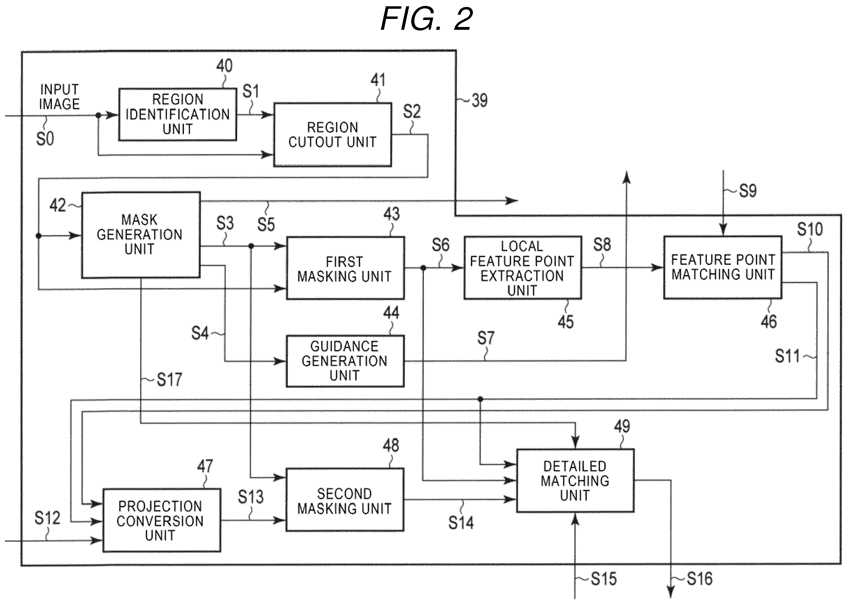

FIG. 2 is a block diagram illustrating a configuration of an image processing function unit 39 according to the present embodiment. The processor 20 realizes each function unit included in the image processing function unit 39 by executing the image processing program. The image processing function unit 39 (processor 20) identifies commodity and discount information indicated by a discount seal attached to the commodity on the basis of a partial image corresponding to commodity included in the input image.

The image processing function unit 39 includes a region identification unit 40, a region cutout unit 41, a mask generation unit 42, a commodity identification unit (a first masking unit 43, a guidance generation unit 44, a local feature point extraction unit 45, a feature point matching unit 46, a projection conversion unit 47, a second masking unit 48, and a detailed matching unit 49).

The region identification unit 40 identifies a commodity region corresponding to individual commodity in the input image and a region other than the commodity region with respect to the input image which is captured by the camera 30, and generates a region segmenting image indicating each region.

The region cutout unit 41 cuts out a partial image corresponding to interest commodity (commodity which is a target of commodity registration) from the input image, based on the region segmenting image generated by the region identification unit 40.

The mask generation unit 42 searches for a previously registered pattern image in the partial image, and generates a mask pattern on the basis of detected position of the pattern image. That is, the mask generation unit 42 searches for a first pattern image corresponding to the previously registered discount seal in the partial image cut out by the region cutout unit 41. In a case where the first pattern image is detected, the mask generation unit 42 outputs a discount flag indicating that discount processing is required in an active (turn-on) manner, and generates a first mask pattern on the basis of a position detected by the first pattern image. In a case where the first pattern image is detected, the mask generation unit 42 generates discount information that is indicated by the first pattern image detected from the partial image. In addition, in a case where the first pattern image is not detected in the partial image and a third pattern image corresponding to a flag seal (will be described below) is detected, the mask generation unit 42 generates a third mask pattern on the basis of a position that is detected by the third pattern image. In addition, the mask generation unit 42 searches for a region corresponding to a barcode (second pattern image) of the partial image.

The first masking unit 43 generates a mask partial image by converting a part (region corresponding to a mask pattern) of the partial image into a constant pixel value, based on the mask patterns (first/third mask patterns) which are generated by the mask generation unit 42. The mask partial image is a partial image in which a region (seal region) to which the seal is affixed is blank.

In a case where the first pattern image is not detected in the partial image and the third pattern image corresponding to a flag seal (will be described below) is detected by the mask generation unit 42, the guidance generation unit 44 outputs a guidance flag instructing to guide that an image of commodity needs to be captured again in an active manner (turn-on) and generates guidance information.

The local feature point extraction unit 45 extracts local feature point information which is used for feature point matching that is performed by the feature point matching unit 46 from the mask partial image.

The feature point matching unit 46 collates the local feature point information extracted from the partial image by the local feature point extraction unit 45 with local feature point information of commodity previously registered in a dictionary, and outputs a projection conversion matrix which represents a relative position relationship of both and commodity information of the commodity (coinciding candidate commodity) which becomes an identification candidate with respect to the partial image, based on correspondence state of a local feature point of both.

The projection conversion unit 47 reads a dictionary-registered image (package image) corresponding to commodity information, based on the commodity information of the coinciding candidate commodity which is output by the feature point matching unit 46, performs projection conversion on the basis of the projection conversion matrix, and generates the projection registration image.

The second masking unit 48 generates a mask registration image by converting a part of a projection registration image into a constant pixel value, based on the mask patterns (first/third mask patterns) generated by the mask generation unit 42. The mask registration image is a dictionary-registered image in which a region corresponding to a region (seal region) to which a seal in the partial image is affixed is blank.

The detailed matching unit 49 calculates degree of similarity of the mask partial image and the mask registration image, and acquires commodity information of commodity corresponding to the partial image which is determined based on the degree of similarity and a predetermined determination threshold. In addition, the detailed matching unit 49 reads a commodity code which is indicated by a barcode printed on the partial image, and acquires commodity information of commodity corresponding to the commodity code.

In addition, the processor 20 realizes a discount processing unit (not illustrated) which performs discount processing on the basis of a price of commodity that the commodity information which is output by the detailed matching unit 49 indicates, and discount information which is output by the mask generation unit 42 by using an image processing program.

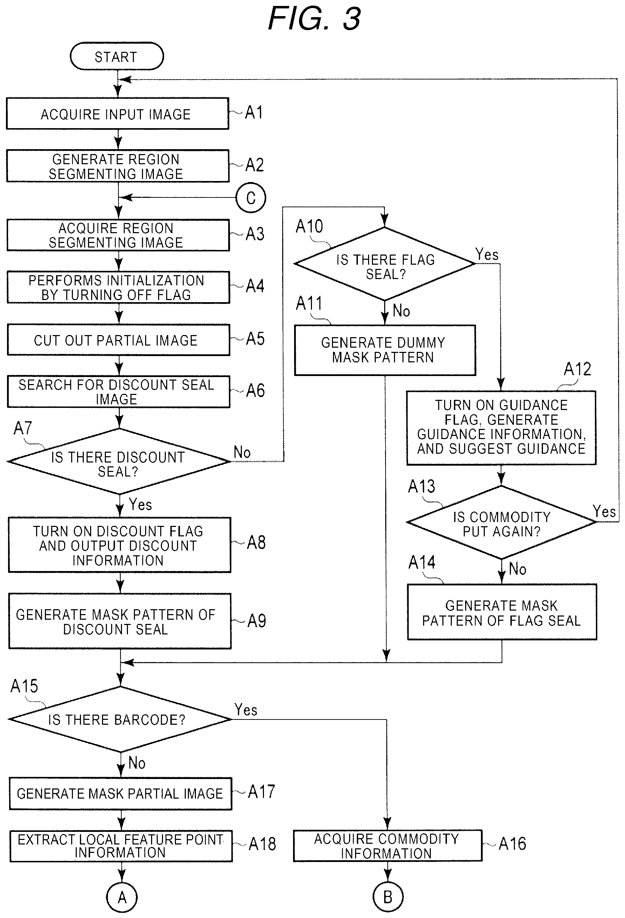

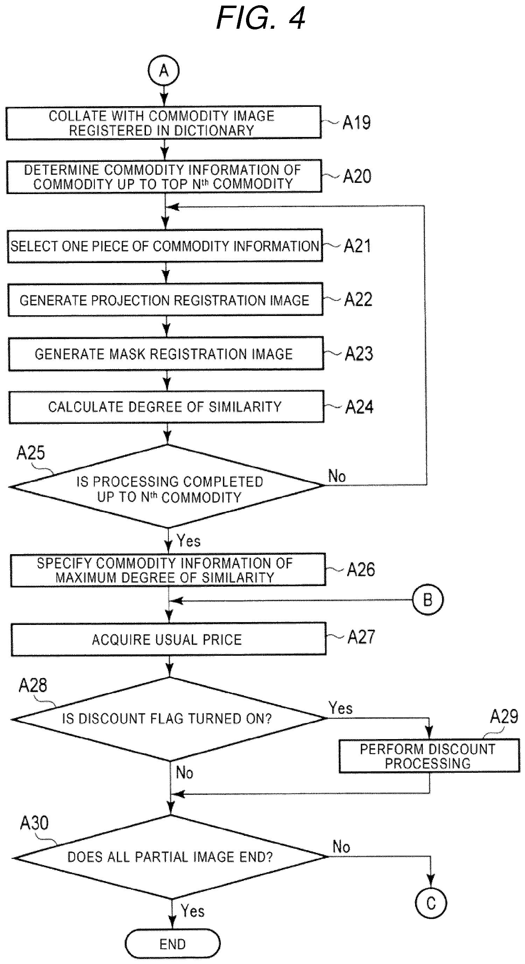

Next, an operation of the POS terminal 11 according to the present embodiment will be described. FIG. 3 and FIG. 4 are flowcharts illustrating the operation of the POS terminal 11 (processor 20) according to the present embodiment.

In a case where commodity that a customer wants to buy is registered, the POS terminal 11 according to the present embodiment instructs capturing an image (performing registration of commodity) when placing commodity in an imaging area of the camera 30. For example, if imaging of the commodity is instructed by an operation for the touch panel 27, the processor 20 instructs the camera 30 to capture an image. The camera 30 captures an image in accordance with instruction from the processor 20, and outputs the captured image data (input image). The processor 20 inputs an image captured by the camera 30 (Act A1).

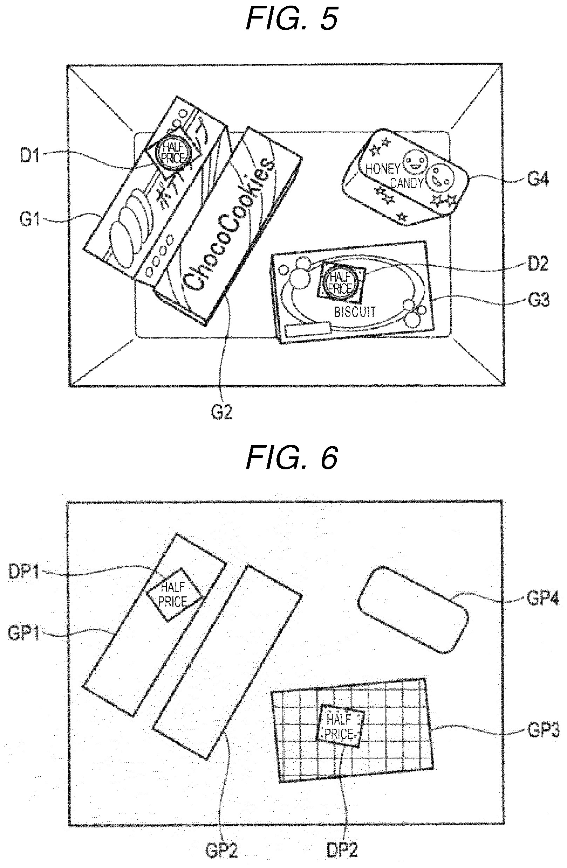

FIG. 5 is a view illustrating an example of the input image according to the present embodiment. The input image illustrated in FIG. 5 includes, for example, four images G1, G2, G3, and G4 of commodity. In addition, the images G1 and G3 include seal image D1 and D2 denoting discount seals attached to the commodity.

Hereinafter, the processor 20 performs processing of commodity identification by using an input image S0 as a target by using the image processing function unit 39. The region identification unit 40 identifies a commodity region corresponding to individual commodity in the input image and a region other than the commodity region, in the input image S0, and generates a region segmenting image indicating each region (Act A2). The region cutout unit 41 acquires a region segmenting image S1 generated by the region identification unit 40 (Act A3), and initializes a discount flag and a guidance flag corresponding to identification processing with regard to one piece of commodity (interest commodity) to be turned off (Act A4). In addition, the region cutout unit 41 cuts out a partial image S2 corresponding to the one piece of commodity (interest commodity) which becomes a recognition target from the input image, based on the region segmenting image (Act A5).

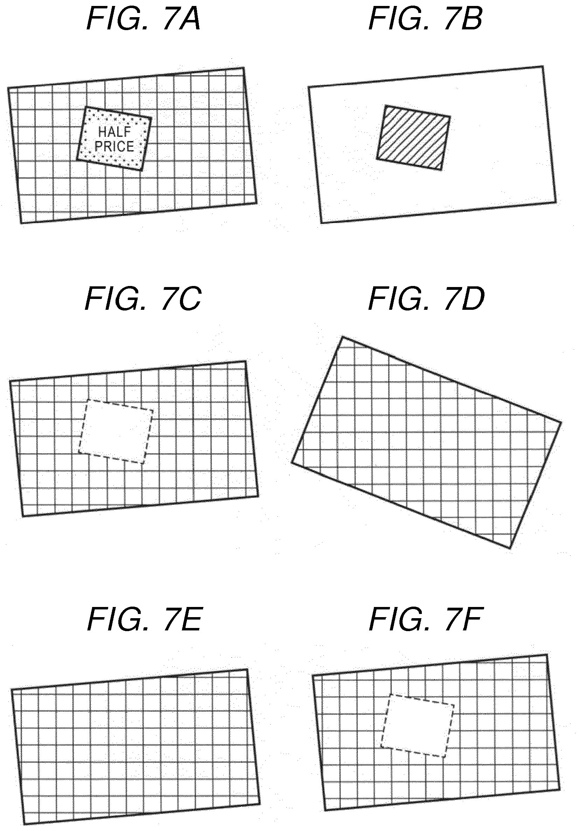

FIG. 6 is a view illustrating an example of the region segmenting image according to the present embodiment. The region segmenting image illustrated in FIG. 6 includes commodity regions GP1, GP2, GP3, and GP4 corresponding to each of the four images G1, G2, G3, and G4 of commodity, and a region other than the commodity region. In addition, the images G1 and G3 include seal regions DP1 and DP2 corresponding to each of the seal images D1 and D2 denoting discount seals affixed to the commodity. FIG. 7A is a view illustrating an example of a partial image of the interest commodity corresponding to the commodity region GP3 which is cut out on the basis of the region segmenting image illustrated in FIG. 6.

The mask generation unit 42 searches for a pattern image corresponding to a previously registered discount seal image in the partial image S2 (Act A6). It is assumed that the registered discount seals include a plurality of types of discount seals in which, for example, a discount price, a discount rate, and the like that are used in a store, or a shape or a size are different from each other. The mask generation unit 42 searches for a previously registered pattern image for detecting the plurality of types of discount seals in the partial image.

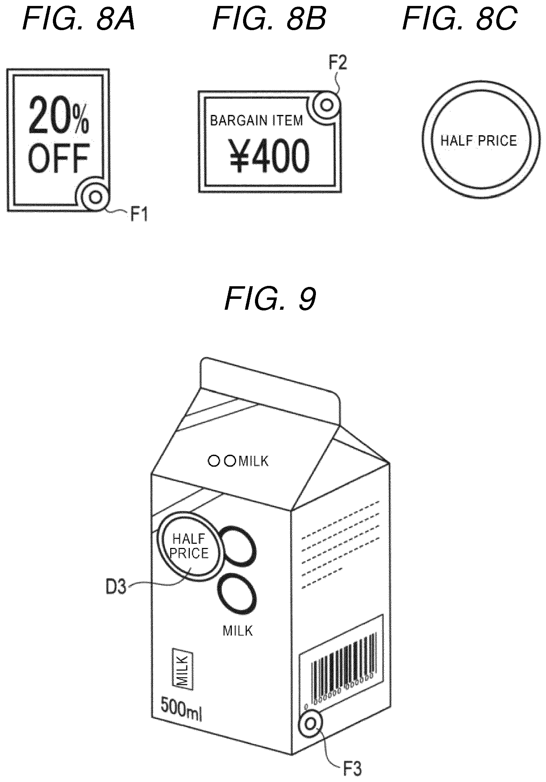

FIGS. 8A, 8B, and 8C are views illustrating an example of the discount seal and the flag seal. FIGS. 8A and 8C illustrate discount seals in which discount rates are described. FIG. 8B illustrates the discount seal in which a discount price is described. Flag seals F1 and F2 are respectively attached to the discount seals illustrated in FIGS. 8A and 8B. The flag seals F1 and F2 are formed to be able to be easily separated from the discount seals. The flag seals F1 and F2 are separated when the discount seals are affixed to commodity, and are affixed to, for example, surfaces different from surfaces to which the discount seals are affixed. That is, when an image of the commodity is captured by the camera 30, an image of a surface to which any one of the discount seal or the flag seal is affixed may be captured.

FIG. 9 is a view illustrating an example of the discount seal and the flag seal affixed to the commodity. The discount seal D3 illustrated in FIG. 9 is affixed to a position that, for example, a customer or an employee can easily recognize. The employee can affix the seal to an arbitrary position without being aware of an affixation position. A flag seal F3 is affixed to a surface different from a surface to which, for example, a discount seal is affixed, for example, a surface on which a barcode is described. Thereby, as the camera 30 captures an image of a surface of any one of the discount seal D3 or the flag seal F3, it is possible to recognize the commodity is a discount target.

Here, in a case where a discount seal image is detected from the partial image (Act A7, Yes), the mask generation unit 42 turns on the discount flag, and outputs discount information S5 corresponding to a pattern image (discount seal image) detected from the partial image (Act A8). The discount information S5 indicates, for example, a discount price or a discount rate described in the discount seal. In addition, the mask generation unit 42 generates a first mask pattern corresponding to the discount seal, based on the detected position of the pattern image (discount seal image) detected from the partial image (Act A9). FIG. 7B illustrates an example of the first mask pattern corresponding to the partial image illustrated in FIG. 7A.

In addition, in a case where the discount seal image is not detected in the partial image (Act A7, No) and the flag seal is detected (Act A10, Yes), the mask generation unit 42 turns on a guidance flag S4. As the guidance flag is turned on, the guidance generation unit 44 generates guidance information S7 and outputs the information. The guidance generation unit 44 outputs, for example, guidance for a store employee or a customer. The guidance generation unit 44 outputs guidance which urges an user to recapture an image of, for example, commodity placed again such that an image of a surface of a discount seal is captured, by using screen display on the touch panel 27 or a voice message from the speaker 24. In a case where images of a plurality of pieces of commodity are captured when first imaging is performed, an image showing commodity (commodity whose flag seal is detected) which becomes a target to be placed again may be displayed on the touch panel 27.

Here, a store employee or a customer can place again commodity placed in an imaging area, and can instruct imaging (registration processing of commodity) of commodity again. For example, if imaging of commodity is instructed again by an operation for the touch panel 27 (Act A13, Yes), the processor 20 instructs the camera 30 to capture an image, and performs the same processing as above with respect to image data (input image) captured by the camera 30 (from Act A1). Meanwhile, in a case where instruction not to capture an image of commodity is input (Act A13, No), the mask generation unit 42 generates the third mask pattern corresponding to the flag seal, based on the detected position of a pattern image (flag seal image) detected from the partial image (Act A14).

In a case where a flag seal image is detected, it is determined that the discount seal is affixed to any portion of commodity, and the discount flag may be turned on. Here, in a case where an image of commodity is not captured again, discount information is not obtained, but in a case where the discount flag is turned on before discount processing is performed but the discount information is not obtained, a message (guidance) which urges a store employee to perform confirmation may be able to be output.

Meanwhile, in a case where a pattern image (discount seal image, flag seal image) is not detected in the partial image (Act A10, No), the mask generation unit 42 generates a dummy mask pattern which is not actually used for mask processing (Act A11).

Furthermore, the mask generation unit 42 searches for a region corresponding to a barcode (second pattern image) on the partial image. In a case where a region (barcode region) S17 corresponding to the barcode (second pattern image) is detected by the mask generation unit 42 (Act A15, Yes), the detailed matching unit 49 obtains a commodity code via reading the barcode, and outputs commodity information S16 of the commodity corresponding to the commodity code.

In this case, the processor 20 acquires a usual price of the commodity, based on the commodity information acquired by the image processing function unit 39 (Act A27). In a case where the discount flag is turned on (Act A28, Yes), the processor 20 performs discount processing on the basis of the discount information S5 output by the mask generation unit 42 (Act A29). That is, the processor 20 calculates the price of commodity after discount according to a discount rate or a discount price which is indicated by the discount information is performed, and records the discounted price in a registered commodity list. In a case where the discount flag is not turned on (Act A28, No), the processor 20 records the commodity information in the registered commodity list without performing discount processing. If recognition processing for the entire partial image included in the region segmenting image is not completed (Act A30, No), the processor 20 repeatedly performs the same processing as above (from Act A3).

Meanwhile, in a case where a region corresponding to the barcode (second pattern image) is not detected by the mask generation unit 42 (Act A15, No), the first masking unit 43 generates a mask partial image S6 which is obtained by converting a part of the partial image into a constant pixel value, based on the mask pattern S3 (first mask pattern or third mask pattern) generated by the mask generation unit 42 (Act A17). FIG. 7C illustrates an example of the mask partial image generated on the basis of the first mask pattern illustrated in FIG. 7B.

The local feature point extraction unit 45 extracts local feature point information S8 indicating a feature point which is used for feature matching, from the mask partial image generated by the first masking unit 43 (Act A18). The feature point matching unit 46 collates the local feature point information S8 extracted from the mask partial image by the local feature point extraction unit 45 with local feature point information S9 of commodity which is previously registered in a dictionary (Act A19). The feature point matching unit 46 calculates a feature point corresponding rate on the basis of the number of feature point pairs in which a distance within a feature amount space is less than a predetermined threshold and records the rate. In addition, the feature point matching unit 46 generates a projection conversion matrix showing a relative position relationship between local feature point groups represented in the below expressions and records the matrix. The feature point matching unit 46 repeatedly collates each of a plurality of pieces of commodity which are registered in a dictionary with the local feature point information of the partial image.

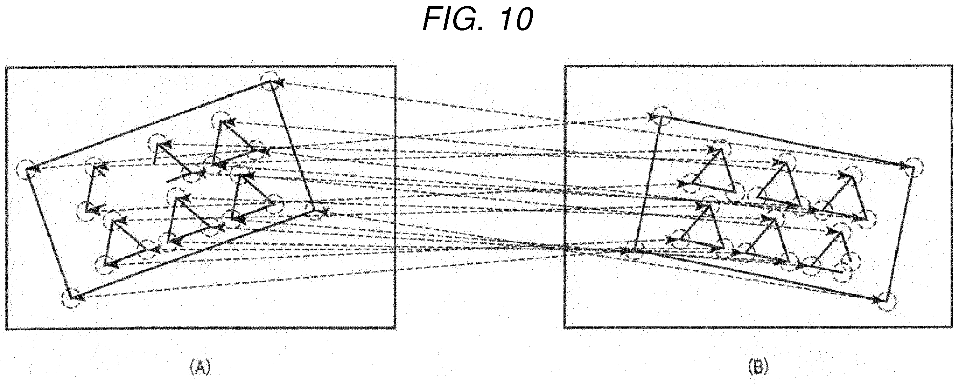

FIG. 10 is a diagram illustrating correspondence between feature points (region) of the partial image and feature points (region) of the commodity previously registered in the dictionary. In the example of collation illustrated in FIG. 10, the number of correspondence to the input image is calculated as C (=19), the total number of feature points of the input image is calculated as A (=20), and the feature point correspondence rate is calculated as C/A (=19/20).

The feature point matching unit 46 determines commodity information S11 of each dictionary-registered commodity up to a top $N^{th}$ commodity of the feature point correspondence rate (N: predetermined number of commodity which becomes a recognition candidate) thereof and generates a projection conversion matrix S10 corresponding to each of the commodity thereof, based on the feature point correspondence rate with respect to the partial image obtained by collating each of a plurality of pieces of commodity previously registered in the dictionary (Act A20).

The projection conversion unit 47 selects one piece from the commodity information on up to the top $N^{th}$ commodity (Act A21), and generates a projection registration image S 13 by performing projection conversion of a dictionary-registered image S12 of commodity corresponding to the commodity information on the basis of the projection conversion matrix generated by the feature point matching unit 46 (Act A22). An example of a conversion expression which uses a projection conversion matrix (3x3 matrix) that generates a projection registration image is illustrated below. Herein, (x, y) are pixel position coordinates of a feature point before projection conversion is performed, and (x', y') are pixel

$$\begin{bmatrix} x' \\ y' \\ 1 \end{bmatrix} = \begin{bmatrix} h_{11} & h_{12} & h_{13} \\ h_{21} & h_{22} & h_{23} \\ h_{31} & h_{32} & h_{33} \end{bmatrix} \begin{bmatrix} x \\ y \\ 1 \end{bmatrix}$$ r the

projection conversion is

FIG. 7D illustrates an example of a dictionary-registered image of commodity. The dictionary-registered image of commodity illustrated in FIG. 7D is converted by projection conversion as illustrated in FIG. 7E. That is, the dictionary-registered image is converted into a projection registration image which is in the same direction and position as the input image (partial image).

Next, the second masking unit 48 generates a mask registration image S14 by converting a part of the projection registration image into a constant pixel value, based on the mask pattern S3 generated by the mask generation unit 42 (Act A23). FIG. 7F illustrates an example of a mask registration image in which a region corresponding to a seal region with respect to the projection registration image illustrated in FIG. 7E is blank.

The detailed matching unit 49 calculates degree of similarity of the mask partial image S6 and the mask registration image S14 on the basis of, for example, the following calculation express between two images (Act A24). Herein, S is degree of similarity between an image P and an image Q, (x, y) are coordinates of a pixel position, P (x, y) is a pixel value of the image P in the coordinates (x, y), and Q (x, y) is a pixel value of the image Q in the coordinates (x, y). In addition, in a case where the mask partial image and the mask registration image are color images, it is assumed that degree of similarity is calculated for each color

$$S = \frac{\sum_{x,y} P(x,y)Q(x,y)}{\sqrt{\sum_{x,y} P(x,y)^2 \sum_{x,y} Q(x,y)^2}}$$

In the same manner as below, processing for calculating degree of similarity is repeated for the each commodity information up to an N$^{th}$ commodity (Acts A21 to A25).

If degree of similarity corresponding to the entire commodity information up to the N$^{th}$ commodity is calculated, the detailed matching unit 49 specifies the commodity information S16 of commodity with a maximum degree of similarity and a value greater than or equal to a predetermined determination threshold S15 which is set in advance and outputs the specified information (Act A26).

In a case where the discount flag is turned on (Act A28, Yes), the processor 20 performs discount processing on the basis of the discount information S5 output by the mask generation unit 42 in the same manner as above (Act A29). In a case where the discount flag is not turned on (Act A28, No), the processor 20 does not perform the discount processing. If recognition processing for the entire partial image included in the region segmenting image is not completed (Act A30, No), the processor 20 repeatedly performs the same processing as above (from Act A3).

By doing so, the POS terminal 11 according to the present embodiment performs the discount processing according to the discount (discount rate or discount price) indicated by the discount seal, based on the image of commodity captured by the camera 30, in a case where the discount seal is affixed to the commodity, and thereafter, can record in the registered commodity list as commodity that a customer wants to buy.

The image processing function unit 39 according to the present embodiment can perform recognition of commodity based on a barcode attached to commodity or a package image, and discount processing according to a discount seal, based on one input image captured by the camera 30, and thus, it is possible to simplify a checkout operation of registering the commodity. In addition, appropriate discount processing for commodity to which a discount seal is affixed is performed by capturing images of a plurality of pieces of commodity, and thus, it is possible to collectively register each processing. In addition, the image processing function unit 39 can identify the commodity by collating the package image of the commodity except for a region to which the discount seal is affixed with an image of dictionary-registered commodity. Hence, the commodity can be identified regardless of which region of the commodity the discount seal is affixed to, and since there is no need to be aware of affixation position when a store staff affixes the discount seal, it is not necessary to use unnecessary nerves. In addition, even in a case where an image of a surface of the commodity to which the discount seal is affixed is not captured, if a flag seal can be detected, existence of the discount seal can be notified to a customer or a store employee, and thus, the risk that the customer fails to receive a discount is reduced. By doing so, it is possible to perform reliable discount processing by reducing work burden with respect to the commodity to which the discount seal is affixed.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope and framework of the inventions.

## Claims

1. An image processing device comprising:

   a region cutout unit that cuts out a partial image corresponding to commodity from an input image;
   a mask generation unit that, in a case where a first pattern image is detected in the partial image, generates discount information on the basis of the first pattern image and generates a first mask pattern on the basis of a position where the first pattern image is detected;
   a commodity identification unit that specifies commodity corresponding to the partial image by matching a mask image which is masked by the first mask pattern with respect to the partial image, with a dictionary-registered image corresponding to each of a plurality of pieces of commodity, and acquires commodity information corresponding to the partial image; and
   a discount processing unit that performs discount processing on the basis of a price of the commodity that the commodity information indicates and the discount information.

2. The device according to claim 1, further comprising:

   a commodity information acquisition unit that, in a case where a second pattern image is detected in the partial image, acquires commodity information corresponding to the second pattern image,
   wherein the commodity identification unit acquires commodity information corresponding to the partial image, based on matching of the mask image and the dictionary-registered image, in a case where the second pattern image is not detected in the partial image.

3. The device according to claim 2,
   wherein the mask generation unit generates a third mask pattern on the basis of a position where a third pattern image is detected, in a case where the first pattern image is not detected in the partial image and the third pattern image is detected, and

wherein, in a case where the second pattern image is not detected in the partial image, the commodity identification unit specifies commodity corresponding to the partial image by matching a mask image which is masked by the third mask pattern with respect to the partial image with a dictionary-registered image corresponding to each of a plurality of pieces of commodity, and acquires commodity information corresponding to the partial image.

4. The device according to any one of claims 1 to 3, wherein the region cutout unit cuts out a plurality of partial images corresponding to each of a plurality of pieces of commodity from the input image, and wherein the discount processing unit performs discount processing with respect to the commodity information corresponding to a partial image in which the first pattern image is detected by using the mask generation unit.

5. The device according to any one of claims 1 to 4, wherein the commodity identification unit includes, a first masking unit that generates a mask partial image by converting a part of the partial image into a constant pixel value, based on the first mask pattern;

a local feature point extraction unit that extracts local feature point information with respect to the mask partial image;

a feature point matching unit that collates the local feature point information and local feature point information of commodity image which is previously registered in a dictionary, and outputs a projection conversion matrix which represents a relative position relationship between both, and commodity information of candidate commodity with respect to content of the partial image, based on a correspondence state of a local feature point between both;

a projection conversion unit that reads a dictionary-registered image corresponding to commodity information of the candidate commodity and generates a projection registration image which is obtained by performing projection conversion of the dictionary-registered image on the basis of the projection conversion matrix;

a second masking unit that generates a mask registration image by converting a part of the projection registration image into a constant pixel value, based on the first mask pattern; and

a detailed matching unit that calculates degree of similarity between the mask partial image and the mask registration image, and outputs commodity information corresponding to the partial image, based on the degree of similarity and a predetermined determination threshold.

6. An image processing system comprising:

a region cutout means that cuts out a partial image corresponding to commodity from an input image;

a mask generation means that, in a case where a first pattern image is detected in the partial image, generates discount information on the basis of the first pattern image and generates a first mask pattern on the basis of a position where the first pattern image is detected;

a commodity identification means that specifies commodity corresponding to the partial image by matching a mask image which is masked by the first mask pattern with respect to the partial image, with a dictionary-registered image corresponding to each of a plurality of pieces of commodity, and acquires commodity information corresponding to the partial image; and

a discount processing means that performs discount processing on the basis of a price of the commodity that the commodity information indicates and the discount information.

7. The system according to claim 6, further comprising:

a commodity information acquisition means that, in a case where a second pattern image is detected in the partial image, acquires commodity information corresponding to the second pattern image,

wherein the commodity identification means acquires commodity information corresponding to the partial image, based on matching of the mask image and the dictionary-registered image, in a case where the second pattern image is not detected in the partial image.

8. The system according to claim 7, wherein the mask generation means generates a third mask pattern on the basis of a position where a third pattern image is detected, in a case where the first pattern image is not detected in the partial image and the third pattern image is detected, and wherein, in a case where the second pattern image is not detected in the partial image, the commodity identification means specifies commodity corresponding to the partial image by matching a mask image which is masked by the third mask pattern with respect to the partial image with a dictionary-registered image corresponding to each of a plurality of pieces of commodity, and acquires commodity information corresponding to the partial image.

9. The system according to any one of claims 6 to 8, wherein the region cutout means cuts out a plurality of partial images corresponding to each of a plurality of pieces of commodity from the input image, and wherein the discount processing means performs discount processing with respect to the commodity information corresponding to a partial image in which the first pattern image is detected by using the mask generation means.

10. The system according to any one of claims 6 to 9, wherein the commodity identification means includes,

a first masking means that generates a mask partial image by converting a part of the partial image into a constant pixel value, based on the first mask pattern;

a local feature point extraction means that extracts local feature point information with respect to the mask partial image;

a feature point matching means that collates the local feature point information and local feature point information of commodity image which is previously registered in a dictionary, and outputs a projection conversion matrix which represents a relative position relationship between both, and commodity information of candidate commodity with respect to content of the partial image, based on a correspondence state of a local feature point between both;

a projection conversion means that reads a dictionary-registered image corresponding to commodity information of the candidate commodity and generates a projection registration image which is obtained by performing projection conversion of the dictionary-registered image on the basis of the projection conversion matrix;

a second masking means that generates a mask registration image by converting a part of the projection registration image into a constant pixel value, based on the first mask pattern; and

a detailed matching means that calculates degree of similarity between the mask partial image and the mask registration image, and outputs commodity information corresponding to the partial image, based on the degree of similarity and a predetermined determination threshold.

11. A method for performing an image processing, comprising the steps of:

- cutting out, by a region cutout unit, a partial image corresponding to commodity from an input image;
- generating, by a mask generation unit, discount information on the basis of the first pattern image in a case where a first pattern image is detected in the partial image, and generating, by the mask generation unit, a first mask pattern on the basis of a position where the first pattern image is detected;

- specifying, by a commodity identification unit, commodity corresponding to the partial image by matching a mask image which is masked by the first mask pattern with respect to the partial image, with a dictionary-registered image corresponding to each of a plurality of pieces of commodity, and acquiring, by a commodity identification unit, commodity information corresponding to the partial image; and
- performing, by a discount processing unit, discount processing on the basis of a price of the commodity that the commodity information indicates and the discount information.

12. The method according to claim 11, further comprising the steps of:

- acquiring, by a commodity information acquisition unit, commodity information corresponding to the second pattern image in a case where a second pattern image is detected in the partial image,
- acquiring, by the commodity identification unit, commodity information corresponding to the partial image, based on matching of the mask image and the dictionary-registered image, in a case where the second pattern image is not detected in the partial image.

13. The method according to claim 12, further comprising the steps of:

- generating, by the mask generation unit, a third mask pattern on the basis of a position where a third pattern image is detected, in a case where the first pattern image is not detected in the partial image and the third pattern image is detected, and
- specifying, by the commodity identification unit, in a case where the second pattern image is not detected in the partial image, commodity corresponding to the partial image by matching a mask image which is masked by the third mask pattern with respect to the partial image with a dictionary-registered image corresponding to each of a plurality of pieces of commodity, and acquiring, by the commodity identification unit, commodity information corresponding to the partial image.

14. The method according to any one of claims 11 to 13, further comprising the steps of:

- cutting out, by the region cutout unit, a plurality of partial images corresponding to each of a plurality of pieces of commodity from the input image, and
- performing, by the discount processing unit, discount processing with respect to the commodity information corresponding to a partial image in which the first pattern image is detected by using the mask generation unit.

15. The method according to any one of claims 11 to 14, further comprising the steps of:

- generating, by a first masking unit, a mask partial image by converting a part of the partial image into a constant pixel value, based on the first mask pattern;
- extracting, by a local feature point extraction unit, local feature point information with respect to the mask partial image;
- collating, by a feature point matching unit, the local feature point information and local feature point information of commodity image which is previously registered in a dictionary, and outputs a projection conversion matrix which represents a relative position relationship between both, and commodity information of candidate commodity with respect to content of the partial image, based on a correspondence state of a local feature point between both;
- reading, by a projection conversion unit, a dictionary-registered image corresponding to commodity information of the candidate commodity and generating, by the projection conversion unit, a projection registration image which is obtained by performing projection conversion of the dictionary-registered image on the basis of the projection conversion matrix;
- generating, by a second masking unit, a mask registration image by converting a part of the projection registration image into a constant pixel value, based on the first mask pattern; and
- calculating, by a detailed matching unit, degree of similarity between the mask partial image and the mask registration image, and outputting, by the detailed matching unit, commodity information corresponding to the partial image, based on the degree of similarity and a predetermined determination threshold.

# FIG. 1

11-1

11-n

| 20 | | 26 |
|---|---|---|
| PROCESSOR | ↔ 11k ↔ | SCANNER |

| 21 | | 27 |
|---|---|---|
| ROM | ↔ | TOUCH PANEL |

| 22 | | 28 |
|---|---|---|
| RAM | ↔ | PRINTER |

| 23 | | 29 |
|---|---|---|
| STORAGE UNIT | ↔ | CARD READER WRITER |

| 24 | | 30 |
|---|---|---|
| SPEAKER | ↔ | CAMERA |

| 25 | | 31 |
|---|---|---|
| TELLER MACHINE | ↔ | COMMUNICATION UNIT |

. . . .

13

STORE COMPUTER

14

COMPUTER

16

FIG. 2

# FIG. 3

```
                    ( START )
                        │
        ┌───────────────────────────────┐
        │     ACQUIRE INPUT IMAGE        │──A1
        └───────────────────────────────┘
                        │
        ┌───────────────────────────────┐
        │      GENERATE REGION           │──A2
        │      SEGMENTING IMAGE          │
        └───────────────────────────────┘
                        │◄──────( C )
        ┌───────────────────────────────┐
        │       ACQUIRE REGION           │──A3
        │       SEGMENTING IMAGE         │
        └───────────────────────────────┘
                        │
        ┌───────────────────────────────┐
        │    PERFORMS INITIALIZATION     │──A4
        │     BY TURNING OFF FLAG        │
        └───────────────────────────────┘
                        │
        ┌───────────────────────────────┐
        │     CUT OUT PARTIAL IMAGE      │──A5
        └───────────────────────────────┘
                        │
        ┌───────────────────────────────┐
        │   SEARCH FOR DISCOUNT SEAL     │──A6
        │            IMAGE               │
        └───────────────────────────────┘
                        │
   A7        ◇─────────────────────◇   No
            │   IS THERE DISCOUNT   │──────
            │        SEAL?          │
             ◇─────────────────────◇
                        │ Yes
        ┌───────────────────────────────┐
        │     TURN ON DISCOUNT FLAG      │──A8
        │     AND OUTPUT DISCOUNT        │
        │        INFORMATION             │
        └───────────────────────────────┘
                        │
        ┌───────────────────────────────┐
        │  GENERATE MASK PATTERN OF      │──A9
        │       DISCOUNT SEAL            │
        └───────────────────────────────┘
```

A10        IS THERE FLAG SEAL?   — Yes

A11        GENERATE DUMMY MASK PATTERN

A12        TURN ON GUIDANCE FLAG, GENERATE GUIDANCE INFORMATION, AND SUGGEST GUIDANCE

A13        IS COMMODITY PUT AGAIN? — Yes

A14        GENERATE MASK PATTERN OF FLAG SEAL

```
   A15       ◇─────────────────────◇   Yes
            │   IS THERE BARCODE?   │──────
             ◇─────────────────────◇
                        │ No
        ┌───────────────────────────────┐
        │  GENERATE MASK PARTIAL IMAGE   │──A17
        └───────────────────────────────┘
                        │
        ┌───────────────────────────────┐
        │  EXTRACT LOCAL FEATURE POINT   │──A18
        │        INFORMATION             │
        └───────────────────────────────┘
                        │
                      ( A )
```

ACQUIRE COMMODITY INFORMATION —A16

( B )

# FIG. 4

(A)

COLLATE WITH COMMODITY IMAGE REGISTERED IN DICTIONARY — A19

DETERMINE COMMODITY INFORMATION OF COMMODITY UP TO TOP N$^{th}$ COMMODITY — A20

SELECT ONE PIECE OF COMMODITY INFORMATION — A21

GENERATE PROJECTION REGISTRATION IMAGE — A22

GENERATE MASK REGISTRATION IMAGE — A23

CALCULATE DEGREE OF SIMILARITY — A24

A25 — IS PROCESSING COMPLETED UP TO N$^{th}$ COMMODITY — No

Yes

SPECIFY COMMODITY INFORMATION OF MAXIMUM DEGREE OF SIMILARITY — A26

(B)

ACQUIRE USUAL PRICE — A27

A28 — IS DISCOUNT FLAG TURNED ON? — Yes

A29 — PERFORM DISCOUNT PROCESSING

No

A30 — DOES ALL PARTIAL IMAGE END? — No

(C)

Yes

END

17

## FIG. 5

## FIG. 6

## FIG. 7A

## FIG. 7B

## FIG. 7C

## FIG. 7D

## FIG. 7E

## FIG. 7F

## FIG. 8A

20% OFF

F1

## FIG. 8B

F2

BARGAIN ITEM

¥400

## FIG. 8C

HALF PRICE

## FIG. 9

○○MILK

HALF PRICE

D3

MILK

MILK

500ml

F3

FIG. 10

(A)

(B)

Europäisches
Patentamt

European
Patent Office

Office européen
des brevets

**EUROPEAN SEARCH REPORT**

Application Number

EP 17 16 2222

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/243307 A1 (WINTER MARCO [DE] ET AL) 19 September 2013 (2013-09-19) * the whole document * ----- | 1-15 | INV. G06Q30/02 G06Q10/06 |
| X | US 2011/123114 A1 (HWANG HYO SEOK [KR] ET AL) 26 May 2011 (2011-05-26) * paragraph [0008] - paragraph [0091]; figures 1-4 * ----- | 1-15 | |

TECHNICAL FIELDS
SEARCHED      (IPC)

G06Q

The present search report has been drawn up for all claims

| Place of search | Date of completion of the search | Examiner |
|---|---|---|
| Munich | 15 May 2017 | Pastore, Edoardo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 ...................................................................
& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 17 16 2222

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2017

| Patent document cited in search report | | Publication date | Patent family member(s) | | Publication date |
|---|---|---|---|---|---|
| US 2013243307 | A1 | 19-09-2013 | CN | 103310189 A | 18-09-2013 |
| | | | EP | 2639745 A1 | 18-09-2013 |
| | | | JP | 2013196703 A | 30-09-2013 |
| | | | KR | 20130105542 A | 25-09-2013 |
| | | | US | 2013243307 A1 | 19-09-2013 |
| US 2011123114 | A1 | 26-05-2011 | KR | 20110057536 A | 01-06-2011 |
| | | | US | 2011123114 A1 | 26-05-2011 |

EPO FORM P0459

For more details about this annex : see Official Journal of the European Patent Office, No. 12/82